# EUROPEAN PATENT APPLICATION

(11) **EP 4 759 779 A1**
(43) Date of publication of application: **17.06.2026**
(21) Application number: 25214085.0
(22) Date of filing: 06.11.2025
(51) Int. Cl.: C03C 3/093, C03C 13/00

(54) **GLASS COMPOSITION AND FIBERGLASS**

(30) Priority: 10.12.2024 TW 113147934
(71) Applicant: Fulltech Fiber Glass Corp., Douliu City, Yunlin County (TW)
(72) Inventor: HSU, Hsien-Chung, Douliu City (TW); CHERN, Bih-Cherng, Douliu City (TW); CHANG, Ching-Shuo, Douliu City (TW); CHANG, Chih-Yuan, Douliu City (TW); LO, Wei-Chih, Douliu City (TW); HSU, Wen-Ho, Douliu City (TW)
(74) Representative: van Dam, Vincent

(57) **Abstract**

Provided is a glass composition, based on the total amount of the glass composition being 100 wt%, comprising a SiO₂ of 56 wt% to 66 wt%, an Al₂O₃ of 15 wt% to 22 wt%, a CaO of 0.1 wt% to 3.5 wt%, a MgO of 10 wt% to 18 wt%, a ZnO of greater than 0 wt% and less than 2.5 wt%, a CuO of greater than 0 wt% and less than 1 wt%, and a B₂O₃ of 4 wt% to 6 wt%, wherein the content of [(CaO+MgO)/SiO₂]+{[(CaO)²+MgO]/[Al₂O₃+(ZnO)²]} is 0.70 to 1.35. In addition, provided also includes a fiberglass comprising the glass composition. The glass composition can make the fiberglass have a high Young's modulus and a wide forming window of spinning operation.

## Description

### BACKGROUND OF THE INVENTION

### 1. Field of the Invention

The present invention is related to a glass composition and a fiberglass, particularly to a glass composition with a high Young's modulus and a wide forming window of spinning operation, and a fiberglass comprising the glass composition.

### 2. Description of the Prior Arts

China Patent Publication No. 103339076 discloses a fiberglass suitable as a reinforcement material for a printed circuit board, and a fiberglass fabric formed by the fiberglass. The fiberglass comprises 56.0 weight (wt)% to 62.5 wt% of SiO₂, 15.5 wt% to 24.5 wt% of Al₂O₃, 0.1 wt% to 4.0 wt% of CaO, 6.0 wt% to 14.0 wt% of MgO, 3.0 wt% to 9.0 wt% of ZnO, and 0.5 wt% to 4.5 wt% of B₂O₃. The total content of SiO₂, Al₂O₃, CaO, MgO, ZnO, and B₂O₃ is 99.0 wt% or more, the total content of ZnO and B₂O₃ is 4.5 wt% to 13.0 wt%, and the weight ratio of MgO to CaO is 3.0 or more. With design of the above components and contents, the fiberglass has both a high elastic modulus and a low thermal expansion coefficient.

The fiberglass has features of high elastic modulus and low thermal expansion coefficient. However, when manufacturing the fiberglass having a high elastic modulus, if the temperature of the glass composition at a melt viscosity of 1000 poise is too high, it may lead to rapid equipment deterioration, reduced equipment lifespan, and high energy consumption. Furthermore, when the forming window of spinning operation is too narrow, it may result in crystallization to easily cause a poor quality of the fiberglass, which limits operability and production capacity.

### SUMMARY OF THE INVENTION

Therefore, one objective of the present invention is to provide a glass composition, which can be used to manufacture a fiberglass of a high Young's modulus and a wide forming window of spinning operation.

Based on the total amount of the glass composition being 100 wt%, the glass composition of the present invention comprises a silicon oxide (SiO₂) of 56 wt% to 66 wt%, an aluminum oxide (Al₂O₃) of 15 wt% to 22 wt%, a calcium oxide (CaO) of 0.1 wt% to 3.5 wt%, a magnesium oxide (MgO) of 10 wt% to 18 wt%, a zinc oxide (ZnO) of greater than 0 wt% and less than 2.5 wt%, a copper oxide (CuO) of greater than 0 wt% and less than 1 wt%, and a boron oxide (B₂O₃) of 4 wt% to 6 wt%, wherein the content of [(CaO+MgO)/SiO₂]+{[(CaO)²+ MgO]/[Al₂O₃+(ZnO)²]} is 0.70 to 1.35.

Another objective of the present invention is to provide a fiberglass with a high Young's modulus.

Accordingly, the fiberglass of the present invention comprises the above-mentioned glass composition.

The effects of the present invention lie in: by controlling the combination of foresaid components and their contents in the glass composition, and the relationship of the contents of CaO, MgO, SiO₂, Al₂O₃, and ZnO calculated from the above formula within a range of 0.70 and 1.35, the glass composition has a Young's modulus of 90 gigapascal (GPa) or above. Moreover, when the fiberglass is manufactured, the temperature of the glass composition at the viscosity of 1000 poise is 1360°C or below, which can reduce equipment deterioration and energy consumption. In addition, the difference between the temperature of the glass composition with the melt viscosity of 1000 poise and the devitrification temperature is 100°C or above. Therefore, the forming window of fiberglass spinning operation is wider, resulting in an increase in production capacity, and the fiberglass is less likely to crystallize, thereby producing high-quality fiberglass.

### DETAILED DESCRIPTION OF THE PREFERRED EMBODIMENTS

The glass composition of the present invention, based on the total amount of the glass composition being 100 wt%, comprises a SiO₂ of 56 wt% to 66 wt%, an Al₂O₃ of 15 wt% to 22 wt%, a CaO of 0.1 wt% to 3.5 wt%, a MgO of 10 wt% to 18 wt%, a ZnO of greater than 0 wt% and less than 2.5 wt%, a CuO of greater than 0 wt% and less than 1 wt%, and a B₂O₃ of 4 wt% to 6 wt%, wherein the content of [(CaO+MgO)/SiO₂]+{[(CaO)²+MgO]/[Al₂O₃+(ZnO) ²]} is 0.70 to 1.35.

The present invention is described in detail below.

In some embodiments of the present invention, the content of [(CaO+ MgO)/SiO₂]+{[(CaO)²+MgQ]/[Al₂O₃+(ZnO)²]} is 0.75 to 1.24.

SiO₂ is the main component of the glass composition. SiO₂ has a three-dimensional network structure, and the basic structural unit of the three-dimensional network structure is a crystal lattice structure of tetrahedral framework of SiO₄. SiO₂ is beneficial to improve the mechanical strength of the glass composition (such as Young's modulus). However, when the content of SiO₂ is greater than 66 wt%, the glass composition may have an excessively high viscosity, which increases production costs. In some embodiments of the present invention, based on the total amount of the glass composition being 100 wt%, the content of SiO₂ is 60 wt% to 66 wt%. In some embodiments of the present invention, based on the total amount of the glass composition being 100 wt%, the content of SiO₂ is 60 wt% to 64 wt%.

Al₂O₃ can bond to parts of oxygen atoms in the three-dimensional network structure of SiO₂ and form bridging oxygen, thereby promoting thermal stability and viscosity of the glass composition. However, when the content of aluminum oxide is greater than 22 wt%, the glass composition may have an excessively high viscosity, which leads to a need of a higher temperature when manufacturing the fiberglass from the glass composition, increasing production costs. In some embodiments of the present invention, based on the total amount of the glass composition being 100 wt%, the content of Al₂O₃ is 16 wt% to 22 wt%. In some embodiments of the present invention, based on the total amount of the glass composition being 100 wt%, the content of Al₂O₃ is 16 wt% to 20 wt%.

MgO can reduce the viscosity of the glass composition, which assists the glass composition to be fully melted during the thermal process and improves the mechanical strength of the fiberglass formed from the glass composition. In some embodiments of the present invention, based on the total amount of the glass composition being 100 wt%, the content of MgO is 12 wt% to 18 wt%. In some embodiments of the present invention, based on the total amount of the glass composition being 100 wt%, the content of MgO is 12 wt% to 14 wt%.

CaO can reduce the viscosity of the glass composition, which assists the glass composition to fully melt during the thermal process. In some embodiments of the present invention, based on the total amount of the glass composition being 100 wt%, the content of CaO is 0.1 wt% to 2.5 wt%. In some embodiments of the present invention, based on the total amount of the glass composition being 100 wt%, the content of CaO is 0.4 wt% to 2.5 wt%.

ZnO can reduce the viscosity of the glass composition, which not only facilitates the melting of the glass composition, but also makes the glass composition insusceptible to crystallization during the process of making the fiberglass, thereby having good spinning processability. In some embodiments of the present invention, based on the total amount of the glass composition being 100 wt%, the content of ZnO is 0.1 wt% to 2 wt%.

CuO makes the glass composition insusceptible to crystallization during the process of making the fiberglass, and thus ensures that the glass composition has good spinning processability. In some embodiments of the present invention, based on the total amount of the glass composition being 100 wt%, the content of CuO is greater than 0 wt% and less than 0.1 wt%.

B₂O₃ can reduce the viscosity of the glass composition, which not only facilitates the melting of the glass composition, but also makes the glass composition insusceptible to crystallization during the process of making the fiberglass, thereby having good spinning processability. In some embodiments of the present invention, based on the total amount of the glass composition being 100 wt%, the content of B₂O₃ is 4 wt% to 5.8 wt%.

In some embodiments of the present invention, the glass composition of the present invention also comprises a doping component, and the doping component comprises at least one dopant. For example, the dopant may be sodium oxide (Na₂O), potassium oxide (K₂O), ferric oxide (Fe₂O₃), or titanium dioxide (TiO₂), but is not limited thereto. In some embodiments of the present invention, the doping component comprises at least one dopant selected from the group consisting of sodium oxide, potassium oxide, ferric oxide, and titanium dioxide. In some embodiments of the present invention, based on the total amount of the glass composition being 100 wt%, the content of the doping component is greater than 0 wt% and less than 1.2 wt%.

The sodium oxide and the potassium oxide may improve the acid resistance of the fiberglass manufactured from the glass composition, and lower the melting point of the glass composition, facilitating the manufacturing of the fiberglass at lower temperatures. However, too much sodium oxide and potassium oxide in the glass composition may decrease the chemical stability of the fiberglass, reducing electrical insulation and mechanical strength of the fiberglass. In some embodiments of the present invention, based on the total amount of the glass composition being 100 wt%, the content of sodium oxide is greater than 0 wt% and less than 0.5 wt%, and the content of potassium oxide is greater than 0 wt% and less than 0.5 wt%.

The ferric oxide can improve the stability of the glass composition during manufacturing process of melting and spinning. However, too much ferric oxide in the glass composition may cause temperature unevenness when melting the glass composition. In some embodiments of the present invention, based on the total amount of the glass composition being 100 wt%, the content of ferric oxide is greater than 0 wt% and less than 1 wt%.

The titanium dioxide may improve the mechanical strength of the glass composition. However, too much titanium dioxide in the glass composition may cause crystallization during the process of forming the fiberglass from the glass composition, which is unfavorable for spinning operation to form the fiberglass. In some embodiments of the present invention, based on the total amount of the glass composition being 100 wt%, the content of titanium dioxide is greater than 0 wt% and less than 1.2 wt%.

### <The fiberglass>

The fiberglass comprises the glass composition. The glass composition is as described above, so no further description is given.

The present invention would be further described with respect to the following embodiments, but it should be understood that the embodiments are only for illustration and should not be construed as limitations to the implementation of the present invention.

### Example 1

60.0 wt% of SiO₂, 19.1 wt% of Al₂O₃, 0.4 wt% of CaO, 12.3 wt% of MgO, 2.0 wt% of ZnO, 0.1 wt% of CuO, 5.0 wt% of B₂O₃, and 1.1 wt% of dopants (derived from the impurities comprised in the above components, including Na₂O, K₂O, Fe₂O₃, and TiO₂), were mixed to prepare a glass composition. The glass composition was placed in a high-temperature furnace and heated at a temperature of 1500°C to 1600°C for 1 hour to 4 hours to obtain a completely molten glass liquid. The glass liquid was poured into a graphite crucible with a diameter of 40 millimeters, and placed in an annealing furnace preheated to 800°C and cooled to 25°C to obtain a glass block.

### Examples 2 to 6 and Comparative Examples 1 to 10

The preparation methods of Examples 2 to 6 and Comparative Examples 1 to 10 were mostly the same as the preparation method of Example 1, except that the contents of each component in the glass composition were different, as shown in Table 1 and Table 2.

### Evaluation Items

The following evaluations were respectively performed on the glass compositions of Examples 1 to 6 and Comparative Examples 1 to 10. For clear explanation, the following testing procedures for the evaluation items were described using the glass composition of Example 1 as a representative.

### Test of the temperature of forming window (ΔT, unit: °C)

2.25 grams of the glass block of Example 1 was placed in the high-temperature furnace, heated to a specific temperature, and maintained for 2 hours. The glass block was taken out from the high-temperature furnace and cooled to room temperature to observe whether there were crystals in the glass block. If so, the specific temperature was recorded as the devitrification temperature of the glass composition of Example 1. The temperature of forming window (abbreviated as ΔT, unit: °C) of the glass composition of Example 1 can be calculated by subtracting the devitrification temperature from the temperature of the glass composition of Example 1 at the viscosity of 1000 poise. The larger the ΔT, the better spinning operationability in the manufacture of the fiberglass.

### Test of the Young's modulus (unit: GPa)

The glass block of Example 1 was cut and ground to obtain a sample to be tested with a size of 1.5 centimeters (cm)×1.5 cm×0.5 cm. A nano indenter (manufacturer: Keysight Technologies; type: The Nano Indenter^{®} XP) was used to apply normal stress to the sample to be tested, and to generate normal strain, then the Young's modulus can be calculated.

**Table 1**

| | Examples | | | | | |
|---|---|---|---|---|---|---|
| | 1 | 2 | 3 | 4 | 5 | 6 |
| SiO₂ (wt%) | 60.0 | 60.0 | 62.0 | 62.0 | 62.0 | 63.5 |
| Al₂O₃ (wt%) | 19.1 | 19.0 | 19.0 | 18.0 | 18.0 | 16.8 |
| CaO (wt%) | 0.4 | 0.5 | 0.5 | 0.5 | 2.5 | 0.5 |
| MgO (wt%) | 12.3 | 13.0 | 13.0 | 14.0 | 12.0 | 14.0 |
| ZnO (wt%) | 2.0 | 0.6 | 0.4 | 0.4 | 0.4 | 0.1 |
| CuO (wt%) | 0.1 | 0.1 | 0.1 | 0.1 | 0.1 | 0.1 |
| B₂O₃ (wt%) | 5.0 | 5.8 | 4.0 | 4.0 | 4.0 | 4.0 |
| Na₂O (wt%) | 0.02 | 0.01 | 0.01 | 0.01 | 0.02 | 0.02 |
| K₂O (wt%) | 0.02 | 0.01 | 0.01 | 0.01 | 0.01 | 0.01 |
| Fe₂O₃ (wt%) | 0.39 | 0.37 | 0.36 | 0.37 | 0.36 | 0.36 |
| TiO₂ (wt%) | 0.67 | 0.61 | 0.62 | 0.61 | 0.61 | 0.61 |
| Content of [(CaO+MgO)/SiO₂]+ {[(CaO)²+MgO]/[Al₂O₃+(ZnO)²]} (abbreviated as CO) | 0.75 | 0.91 | 0.91 | 1.02 | 1.24 | 1.08 |
| Temperature at viscosity of 1000 poise (abbreviated as T₁₀₀₀, °C) | 1312 | 1304 | 1333 | 1322 | 1329 | 1356 |
| Devitrification temperature (abbreviated as DT, °C) | 1194 | 1188 | 1216 | 1214 | 1223 | 1253 |
| Temperature of forming window (abbreviated as ΔT, °C) | 118 | 116 | 117 | 108 | 106 | 103 |
| Young's modulus (GPa) | 97.3 | 97 | 98.1 | 98.6 | 98.4 | 99.7 |

**Table 2**

| | Comparative Examples | | | | | | | | | |
|---|---|---|---|---|---|---|---|---|---|---|
| | 1 | 2 | 3 | 4 | 5 | 6 | 7 | 8 | 9 | 10 |
| SiO₂ (wt%) | 57.3 | 65.0 | 58.4 | 58.0 | 65.0 | 61.0 | 58.0 | 65.1 | 64.0 | 65.4 |
| Al₂O₃ (wt%) | 16.0 | 19.4 | 15.5 | 15.0 | 15.1 | 15.6 | 15.1 | 15.6 | 19.3 | 21.0 |
| CaO (wt%) | 0.7 | 0.4 | 0.6 | 2.5 | 0.4 | 0.5 | 3.0 | 0.4 | 0.5 | 0.4 |
| MgO (wt%) | 18.0 | 10.0 | 17.0 | 17.0 | 10.0 | 13.0 | 15.0 | 10.0 | 13.0 | 10.0 |
| ZnO (wt%) | 1.0 | 0.1 | 2.5 | 2.5 | 2.5 | 2.0 | 2.0 | 2.0 | 2.0 | 2.0 |
| CuO (wt%) | 0.1 | 0.1 | 0.1 | 0.1 | 0.1 | 1.0 | 1.0 | 1.0 | 0.1 | 0.1 |
| B₂O₃ (wt%) | 6.0 | 4.0 | 5.0 | 4.0 | 6.0 | 6.0 | 5.0 | 5.0 | 0.01 | 0.01 |
| Na₂O (wt%) | 0.00 | 0.01 | 0.00 | 0.02 | 0.01 | 0.01 | 0.02 | 0.01 | 0.01 | 0.01 |
| K₂O (wt%) | 0.00 | 0.01 | 0.00 | 0.00 | 0.01 | 0.01 | 0.01 | 0.01 | 0.01 | 0.01 |
| Fe₂O₃ (wt%) | 0.37 | 0.35 | 0.37 | 0.35 | 0.33 | 0.34 | 0.34 | 0.33 | 0.40 | 0.40 |
| TiO₂ (wt%) | 0.53 | 0.63 | 0.53 | 0.53 | 0.55 | 0.54 | 0.53 | 0.55 | 0.67 | 0.67 |
| CO | 1.41 | 0.68 | 1.10 | 1.43 | 0.64 | 0.90 | 1.57 | 0.68 | 0.78 | 0.57 |
| T₁₀₀₀ (°C) | 1252 | 1416 | 1270 | 1261 | 1410 | 1318 | 1274 | 1412 | 1376 | 1421 |
| DT (°C) | 1209 | 1304 | 1229 | 1222 | 1376 | 1276 | 1237 | 1374 | 1262 | 1300 |
| ΔT (°C) | 43 | 112 | 41 | 39 | 34 | 42 | 37 | 38 | 114 | 121 |
| Young's modulus (GPa) | 91.4 | 102 | 94.1 | 93.3 | 102.5 | 97.6 | 93.8 | 102.6 | 100.8 | 102.6 |

In summary, by the combination of each component and its content range above, and the relationship of the content of CaO, MgO, SiO₂, Al₂O₃, and ZnO controlled to be 0.70 to 1.35, the glass composition has a Young's modulus of 90 GPa or above. Moreover, when the fiberglass is manufactured, the temperature of the glass composition at the viscosity of 1000 poise is 1360°C or below, which can reduce equipment deterioration and energy consumption. In addition, the difference between the temperature of the glass composition with the melt viscosity of 1000 poise and the devitrification temperature is 100°C or above. Therefore, the forming window of fiberglass spinning operation is wider, resulting in an increase in production capacity, and the fiberglass is less likely to crystallize, thereby producing high-quality fiberglass. Therefore, the objectives of the present invention can be achieved.

## Claims

1. A glass composition, **characterized in that** based on the total amount of the glass composition being 100 wt%, the glass composition comprises:
a silicon oxide (SiO₂) of 56 wt% to 66 wt%;
an aluminum oxide (Al₂O₃) of 15 wt% to 22 wt%;
a calcium oxide (CaO) of 0.1 wt% to 3.5 wt%;
a magnesium oxide (MgO) of 10 wt% to 18 wt%;
a zinc oxide (ZnO) of greater than 0 wt% and less than 2.5 wt%;
a copper oxide (CuO) of greater than 0 wt% and less than 1 wt%; and
a boron oxide (B₂O₃) of 4 wt% to 6 wt%;
wherein the content of [(CaO+MgO)/SiO₂]+{[(CaO)²+MgO]/[Al₂O₃+ (ZnO)²]} is 0.70 to 1.35.

2. The glass composition as claimed in claim 1, **characterized in that** the content of [(CaO+MgO)/SiO₂]+{[(CaO)²+MgO]/[Al₂O₃+(ZnO)²]} is 0.75 to 1.24.

3. The glass composition as claimed in claim 1, **characterized in that** the content of SiO₂ is 60 wt% to 66 wt% based on the total amount of the glass composition.

4. The glass composition as claimed in claim 1, **characterized in that** the content of Al₂O₃ is 16 wt% to 22 wt% based on the total amount of the glass composition.

5. The glass composition as claimed in claim 1, **characterized in that** the content of CaO is 0.1 wt% to 2.5 wt% based on the total amount of the glass composition.

6. The glass composition as claimed in claim 1, **characterized in that** the content of MgO is 12 wt% to 18 wt% based on the total amount of the glass composition.

7. The glass composition as claimed in claim 1, **characterized in that** the content of ZnO is 0.1 wt% to 2 wt% based on the total amount of the glass composition.

8. The glass composition as claimed in claim 1, **characterized in that** the content of CuO is greater than 0 wt% and less than 0.1 wt% based on the total amount of the glass composition.

9. A fiberglass, comprising the glass composition as claimed in any one of claims 1 to 8.
